# EUROPÄISCHE PATENTANMELDUNG

(11) **EP 1 312 660 A1**
(43) Veröffentlichungstag der Anmeldung: **21.05.2003**
(21) Anmeldenummer: 01127098.0
(22) Anmeldetag: 15.11.2001
(51) Int. Cl.: C09K 21/12, D06M 11/82, D06M 13/288, C07F 9/28

(54) **Flammhemmende Zusammensetzungen aus Methanphosphonsäure, Borsäure und organischer Base**

(71) Anmelder: Ciba Spezialitätenchemie Pfersee GmbH, 86462 Langweid a.L. (DE)
(72) Erfinder: Dermeik, Salman, Dr., 86157 Augsburg (DE); Braun, Reinhold, 86830 Schwabmünchen (DE); Lemmer, Karl-Heinz, 86156 Augsburg (DE)

(57) **Zusammenfassung**

Es werden Zusammensetzungen beschrieben, die sich erhalten lassen durch Herstellen einer Mischung aus Methanphosphonsäure, Borsäure, Wasser und gegebenenfalls Harnstoff und nachfolgende Zugabe von Dicyandiamid und/oder Guanylharnstoff zu dieser Mischung. Die so erhaltenen Zusammensetzungen eignen sich zur flammhemmenden Ausrüstung von Fasermaterialien, insbesondere von Geweben aus Cellulosefasern.

## Beschreibung

Die Erfindung betrifft Zusammensetzungen, die sich erhalten lassen durch Zugabe von Dicyandiamid und/oder Guanylharnstoff sowie gegebenenfalls zusätzlich Harnstoff zu einer Mischung, welche Methanphosphonsäure, Borsäure und Wasser sowie gegebenenfalls Harnstoff enthält. Sie betrifft ferner die Verwendung solcher Zusammensetzungen zur flammhemmenden Ausrüstung von Fasermaterialien, insbesondere von textilen Flächengebilden.

Es ist bekannt, textilen Flächengebilden flammhemmende Eigenschaften durch deren Behandlung mit Borsäure enthaltenden Zusammensetzungen zu verleihen. Dies geht beispielsweise aus der DE-A 41 40 966 hervor. Bekannt ist auch die flammhemmende Ausrüstung mittels Zusammensetzungen, die ein Salz aus Methanphosphonsäure und Guanylharnstoff enthalten. Dies ist beschrieben in der EP-B 57 668 und in der US 4 666 967. Aus der EP-A 499 867 sind Zusammensetzungen bekannt, welche Formaldehyd-Umsetzungsprodukte der Salze aus Methanphosphonsäure und Guanylharnstoff enthalten.
Die EP-A 469 339 beschreibt Zusammensetzungen, welche modifizierte Salze aus Methanphosphonsäure und Guanylharnstoff und zusätzlich Borsäure enthalten. Die Modifikation der Salze besteht darin, dass eine Umsetzung mit Formaldehyd, d.h. eine Methylolierung, durchgeführt wurde. Diese Zusammensetzungen weisen den Nachteil auf, dass sie noch freien Formaldehyd enthalten und dass bei ihrer Verwendung Formaldehyd abgespalten werden kann. Es wäre daher wünschenswert, Zusammensetzungen zur Verfügung zu stellen, welche Borsäure und Salze aus Methanphosphonsäure und Guanylharnstoff enthalten, wobei diese Salze Formaldehyd weder in freier noch in gebundener Form enthalten. Versuche haben jedoch gezeigt, dass einer wässrigen Lösung solcher Salze nur sehr geringe Mengen an Borsäure hinzugefügt werden können. Bei Zugabe größerer Mengen H₃BO₃ verschlechtert sich die Stabilität/Homogenität der erhaltenen Zusammensetzungen, wodurch diese nur noch eingeschränkt oder überhaupt nicht mehr für die flammhemmende Ausrüstung von Textilien nach üblichen Methoden geeignet sind.

Der vorliegenden Erfindung lag die Aufgabe zugrunde, wässrige Zusammensetzungen zur Verfügung zu stellen, die ausgezeichnete Stabilität aufweisen, Salze aus Methanphosphonsäure und Guanylharnstoff enthalten, wobei diese Salze keinen gebundenen Formaldehyd enthalten und wobei die gute Stabilität der Zusammensetzungen auch dann noch gegeben ist, wenn sie höhere Mengen an Borsäure enthalten.

Unter "höheren Mengen" an Borsäure sind hierbei Mengen zu verstehen, welche zur Instabilität der Zusammensetzungen führen, wenn man diese Mengen an Borsäure einer fertigen Lösung eines Salzes aus Methanphosphonsäure und Guanylharnstoff hinzufügt.

Die Aufgabe wurde gelöst durch eine Zusammensetzung, die herstellbar ist durch folgende nacheinander ablaufende Verfahrensschritte
a) Herstellung einer Mischung A), welche Methanphosphonsäure, Borsäure und Wasser enthält,
b) Zugabe von Dicyandiamid und/oder Guanylharnstoff zur Mischung A),
c) gegebenenfalls Neutralisation des entstandenen Gemischs mit einer Base.

Erfindungsgemäße Zusammensetzungen weisen folgende Vorteile auf.
1. Sie besitzen ausgezeichnete Stabilität, auch wenn sie Mengen an Borsäure enthalten, die zur Instabilität von Zusammensetzungen führen würden, wenn man diese Mengen Borsäure nachträglich einer wässrigen Lösung eines Salzes aus Methanphosphonsäure und Guanylharnstoff hinzufügen würde. Es können zwar nicht unbegrenzt hohe Mengen an H₃BO₃ in erfindungsgemäßen Zusammensetzungen vorliegen, ohne dass die Stabilität/Homogenität der Zusammensetzungen negativ beeinflusst wird. Aber es ist immerhin möglich, dass Borsäure in einer bis zum Faktor 10 höheren Menge enthalten sein kann als im Fall der nachträglichen Zugabe von Borsäure zur fertigen wässrigen Lösung des Salzes. Es wird angenommen, dass dieser Vorteil der Verwendung einer höheren Menge H₃BO₃ daraus resultiert, dass die Borsäure mit Methanphosphonsäure gemischt wird, bevor eine Zugabe von Dicyandiamid und/oder Guanylharnstoff erfolgt.
2. Sie eignen sich ausgezeichnet zur flammhemmenden Ausrüstung von Fasermaterialien, insbesondere von Textilien, welche Cellulosefasern enthalten, z.B. Baumwolle. Den Textilien können hierdurch flammhemmende Eigenschaften verliehen werden, die mindestens ebenso gut, in vielen Fällen sogar besser, sind als im Fall der Verwendung von Zusammensetzungen, welche frei von Borsäure sind, im übrigen aber die gleichen Komponenten in gleichen Mengen enthalten wie erfindungsgemäße Zusammensetzungen. Die vielfach verbesserte flammhemmende Wirkung ist möglicherweise auf einen Synergismus zwischen den Phosphor-/Stickstoffverbindungen und der Borverbindung zurückzuführen. So ist es möglich, in aus dem Stand der Technik bekannten wässrigen Lösungen von Salzen aus Methanphosphonsäure und Guanylharnstoff einen Teil dieser Salze durch Borsäure zu ersetzen, wodurch sich unter anderem auch ein Preisvorteil ergibt.

Ein entscheidendes Kriterium erfindungsgemäßer Zusammensetzungen besteht darin, dass Methanphosphonsäure mit Wasser und Borsäure (und gegebenenfalls Harnstoff) vermischt wird (wobei die oben genannte "Mischung A)" entsteht), bevor eine Zugabe von Dicyandiamid und/oder Guanylharnstoff erfolgt.

Erfindungsgemäße Zusammensetzungen können dadurch erhalten werden, dass man in einem ersten Schritt (= Schritt a)) eine Mischung (= Mischung A)) herstellt, welche Methanphosphonsäure, Borsäure und Wasser enthält und in einem zweiten Schritt (= Schritt b)) diese Mischung A) auf eine Temperatur im Bereich von 50°C bis 130°C, vorzugsweise von 70°C bis 95°C erwärmt und bei dieser Temperatur Dicyandiamid und/oder Guanylharnstoff zu der Mischung A) hinzufügt. Gegebenenfalls kann sich hieran ein dritter Schritt (= Schritt c)) anschließen, in dem das entstandene Gemisch mit einer Base neutralisiert wird. Gegebenenfalls können während oder nach Durchführung von Schritt c) weitere Komponenten hinzugefügt werden.

Die Herstellung der Mischung A) in Verfahrensschritt a) kann erfolgen, indem man zu einer wässrigen Lösung von Methanphosphonsäure (CH₃PO(OH)₂) Borsäure in fester Form portionsweise hinzufügt und gegebenenfalls die erhaltene Mischung rührt, bis eine klare Lösung entstanden ist. Hierbei kann zur Erhöhung der Lösungsgeschwindigkeit bei erhöhter Temperatur gearbeitet werden.
In einer bevorzugten Ausführungsform wird dabei die wässrige Lösung von Methanphosphonsäure hergestellt, indem man zu Methanphosphonsäuredimethylester oder zu Methanphosphonsäuremonomethylester oder zu einem Gemisch dieser beiden Ester Wasser und einen Katalysator, z.B. Phosphorsäure oder Schwefelsäure, vorzugsweise Methanphosphonsäure (Katalysator für die nachfolgende Hydrolyse) hinzufügt und dann das erhaltene Gemisch erwärmt, vorzugsweise auf eine Temperatur im Bereich von 120°C bis 180°C und bei dieser Temperatur Wasser portionsweise hinzufügt, wobei die Temperatur im genannten Bereich gehalten wird, bis im wesentlichen vollständige Hydrolyse der Estergruppen zu Methanphosphonsäure stattgefunden hat.

Während der Hydrolyse und anschließend daran werden das entstandene Methanol und ein Teil des Wassers abdestilliert. Dann wird gegebenenfalls nach Abkühlen des Hydrolyseprodukts Wasser in einer solchen Menge hinzugefügt, dass, nach Hinzufügen von Borsäure, in Mischung A) das gewünschte Mengenverhältnis Methanphosphonsäure : Wasser vorliegt. Die nach Abkühlen entstandene wässrige Lösung von Methanphosphonsäure kann ohne weitere Reinigungsoperationen direkt zur Herstellung der Mischung A) verwendet werden.

Es ist von Vorteil, wenn die Mischung A) neben Methanphosphonsäure, Wasser und Borsäure zusätzlich Harnstoff enthält. Vorzugsweise enthält sie außer diesen 4 Komponenten keine weiteren Inhaltsstoffe mit Ausnahme von geringen nicht-hydrolysierten Restmengen an Methanphosphonsäuremonomethyl- oder -dimethylester. Die Anwesenheit von Harnstoff in Mischung A) ist bevorzugt, weil dadurch die Menge an Dicyandiamid oder Guanylharnstoff, die in Schritt b) hinzugefügt wird, niedriger gehalten werden kann als in dem Fall, dass Mischung A) keinen Harnstoff enthält. Der Harnstoff kann zur wässrigen Lösung, die Methanphosphonsäure enthält, vor der Zugabe von Borsäure oder gleichzeitig oder nach dieser Zugabe hinzugefügt werden. Anstatt Harnstoff vor Durchführung von Schritt b) hinzuzufügen, kann Harnstoff auch gleichzeitig oder nach Hinzufügen von Dicyandiamid und/oder Guanylharnstoff zugegeben werden. Diese Ausführungsform ist jedoch weniger bevorzugt, in diesem Fall enthält Mischung A) keinen Harnstoff.

Vorzugsweise werden im ersten Schritt bei der Herstellung der Mischung A) solche Mengen an Ausgangsstoffen verwendet, dass die erhaltene Mischung A) 25 bis bis 50 Gewichtsteile Methanphosphonsäure pro 100 Gewichtsteile Wasser und 0,1 Mol bis 0,3 Mol Borsäure pro Mol Methanphosphonsäure enthält.
Falls bei der Herstellung der Mischung A) zusätzlich Harnstoff verwendet wird, so ist es bevorzugt, solche Mengen an Harnstoff einzusetzen, dass die Mischung A) 2 bis 10 g Harnstoff pro 100 g Methanphosphonsäure enthält.

Im zweiten Schritt (= Schritt b)) zur Herstellung erfindungsgemäßer Zusammensetzungen wird entweder Dicyandiamid (H₂N-C(=NH)-NH-C≡N) oder Guanylharnstoff
(H₂N-C(=NH)-NH-CONH₂) oder ein Gemisch aus diesen beiden Basen zu der Mischung A) gegeben. Hierzu wird die Mischung A) vorzugsweise vorher auf eine Temperatur im Bereich von 70°C bis 95°C erwärmt, und bei dieser Temperatur erfolgt die Zugabe von Dicyandiamid und/oder Guanylharnstoff. Während dieser Zugabe, die vorzugsweise in kleinen Portionen erfolgt, wird das Reaktionsgemisch vorzugsweise auf einer Temperatur im Bereich von 70°C bis 95°C gehalten.
Vorzugsweise wird in Verfahrensschritt b) nur Dicyandiamid zur Mischung A) hinzugefügt. Es kann aber statt Dicyandiamid auch Guanylharnstoff oder eine Mischung aus Dicyandiamid und Guanylharnstoff verwendet werden. Falls Dicyandiamid eingesetzt wird, kann es in fester Form zu der Mischung A) hinzugefügt werden, vorzugsweise in kleinen Portionen. In wässriger Lösung hydrolysiert Dicyandiamid zu Guanylharnstoff, so dass nach Beendigung von Schritt b) eine wässrige Lösung erhalten wird, welche unter anderem ein Guanylharnstoffsalz der Methanphosphonsäure enthält.
Eine bevorzugte Ausführungsform des Verfahrens zur Herstellung erfindungsgemäßer Zusammensetzungen besteht darin, dass in Schritt b) kein Guanylharnstoff verwendet wird und dass 20 bis 30 g Dicyandiamid pro 100 g Mischung A) eingesetzt werden.
Falls in Schritt b) Guanylharnstoff oder ein Gemisch von Dicyandiamid und Guanylharnstoff verwendet wird, so werden bevorzugt solche Mengen an diesen Verbindungen eingesetzt, dass ebensoviel Äquivalente an basischen Stickstoffatomen pro 100 g Mischung A) vorliegen wie in dem Fall, dass nur Dicyandiamid in einer Menge von 20 bis 30 g pro 100 g Mischung A) verwendet wird.

Im Anschluß an Verfahrensschritt b) kann gegebenenfalls noch ein Verfahrensschritt c) durchgeführt werden, insbesondere dann, wenn das nach Schritt b) erhaltene Produktgemisch einen pH-Wert (bei 20°C) von weniger als 3,5 besitzt. Dieser Verfahrensschritt besteht in einer Neutralisation mit einer Base. Als Basen geeignet hierfür sind Amine, z.B. Triethanolamin. Der nach Neutralisation erhaltene pH-Wert liegt vorzugsweise im Bereich von 3,3 bis 4,5.

Während oder nach der Neutralisation (Schritt c)) können den erfindungsgemäßen Zusammensetzungen weitere Komponenten hinzugefügt werden, die dem Fachmann auf dem Gebiet der Textilausrüstung bekannt sind, beispielsweise Cellulosevernetzer und/oder öl- bzw. wasserabweisende Produkte wie Polysiloxane oder Fluor enthaltende Polymere. Diese weiteren Komponenten können natürlich auch nach Verfahrensschritt b) hinzugefügt werden, falls kein Schritt c) durchgeführt wird.

Erfindungsgemäße Zusammensetzungen eignen sich ausgezeichnet zur flammhemmenden Ausrüstung von Fasermaterialien, insbesondere von textilen Flächengebilden. Besonders gut geeignet sind sie zur Ausrüstung von Geweben, die zu 50 bis 100 Gew% aus Cellulosefasern bestehen, z.B. von Baumwollgeweben. 0 bis 50 Gew% können hierbei aus anderen Fasern, z.B. Synthesefasern bestehen. Es lassen sich aber auch auf textilen Flächengebilden, welche zu 50 bis 100 Gew% aus Syntesefasern bestehen, z.B. aus Polyester, gute flammhemmende Eigenschaften erzielen. Die ausgerüsteten textilen Flächengebilde lassen sich zu flammhemmend ausgerüsteten Textilien, z.B. technischen Geweben oder Heimtextilien wie Polsterstoffen verarbeiten.
Das Aufbringen erfindungsgemäßer Zusammensetzungen auf die textilen Flächengebilde kann nach Methoden erfolgen, die dem Fachmann auf dem Gebiet der Textilausrüstung bekannt sind. Vorzugsweise wird hierfür ein Foulard-Verfahren angewandt, wobei die erfindungsgemäßen Zusammensetzungen gegebenenfalls auf die für Foulardverfahren übliche Gebrauchskonzentration verdünnt werden. Nach Foulardierung werden Trocknung und gegebenenfalls eine Kondensation bei erhöhten Temperaturen nach ebenfalls bekannten Methoden durchgeführt.

Die Erfindung wird nachfolgend durch Ausführungsbeispiele veranschaulicht.

### Beispiel 1

### Herstellung einer wässrigen Lösung von Methanphosphonsäure

491 g Methanphosphonsäuredimethylester
156 g Methanphosphonsäure
   und
13 g Wasser
wurden auf 140°C erhitzt. Dann wurden 330 g Wasser innerhalb 17 Stunden so zudosiert, dass die Innentemperatur während der gesamten Wasserzugabe einen Wert von 135 bis 140°C besaß. Hierbei wurden gleichzeitig Methanol-Wasser-Gemisch und etwas Methanphosphonsäureester abdestilliert. Anschließend wurde noch 90 Minuten bei 140°C gerührt, auf ca. 85°C abgekühlt und während der Abkühlphase nochmals 830 g Wasser zugegeben. Man erhielt eine ca. 35 %ige Lösung von Methanphosphonsäure, welche praktisch frei von Methanphosphonsäuremonomethyl- und -dimethylester war (abgesehen von Spuren an Restmengen).

### Beispiel 2 (nicht erfindungsgemäß)

Zu 406 g der bei Beispiel 1 erhaltenen wässrigen Lösung von Methanphosphonsäure, wurden bei 85°C 115 g festes Dicyandiamid in Portionen zugegeben. Anschließend wurde 5 Stunden bei 85°C gerührt. Dann gab man nach Abkühlen auf 50°C 35 g Wasser zu. Bei einer Temperatur der Lösung von ca. 40°C wurden 17 g Triethanolamin zugegeben. Es wurde eine klare Lösung (= "Lösung A") erhalten, deren pH-Wert bei Raumtemperatur etwa 3,5 betrug.

### Beispiel 3 (erfindungsgemäß)

Zu 406 g der nach Beispiel 1 erhaltenen 85°C warmen wässrigen Lösung von Methanphosphonsäure gab man 23 g Borsäure in fester Form zu. Es wurde bei 85°C gerührt, bis eine klare Lösung vorlag. Es wurde weiter wie in Beispiel 2, beginnend mit der Zugabe von Dicyandiamid, gearbeitet. Man erhielt eine klare Lösung (="Lösung B") mit einem pH-Wert von etwa 3,5 bei Raumtemperatur.

### Beispiel 4 (erfindungsgemäß)

Zu 406 g der nach Beispiel 1 erhaltenen wässrigen Lösung von Methanphosphonsäure wurden bei 85°C 4 g Harnstoff in fester Form und 23 g Borsäure zugegeben. Es wurde bei 85°C gerührt, bis eine klare Lösung vorlag. Es wurde weiter gearbeitet wie in Beispiel 2, beginnend mit der Zugabe von Dicyandiamid; jedoch wurden nur 110 g Dicyandiamid statt 115 g zugegeben. Es wurde eine klare Lösung (="Lösung C") erhalten, deren pH-Wert bei Raumtemperatur etwa 3,5 betrug.

Die nachfolgende Tabelle 1 zeigt die Stabilitäten der Lösungen A, B und C.

**Tabelle 1**

| | Temperatur der Lagerung | | | |
|---|---|---|---|---|
| | + 60°C | - 20°C | - 10°C | 0° |
| Lösung A | 19 | 14 | 12 | 12 |
| Lösung B | 19 | 19 | 19 | 19 |
| Lösung C | 39 | 25 | 19 | 24 |

Bei Lagerung bei Raumtemperatur waren alle Lösungen mehrere Monate stabil und homogen. In Tabelle 1 bedeuten die eingetragenen Werte diejenige Anzahl von Tagen, bei denen die Lösungen begannen, instabil zu werden, d.h. wo Bildung von Ablagerungen begann. Es ist festzustellen, dass die erfindungsgemäßen Lösungen B und C bezüglich ihrer Stabilität der Vergleichslösung A überlegen sind.

### Beispiel 5

### Ausrüstversuche

Mit den Lösungen A, B und C wurden ungefärbte Gewebe aus 100 % Baumwolle mittels eines Foulard-Verfahrens ausgerüstet.
- Flottenkonzentrationen:: in allen Fällen
180 g Lösung pro I Flotte

Nach Foulardierung wurde auf eine Flottenaufnahme von etwa 80 % (bezogen auf Gewebegewicht vor Foulardierung) abgequetscht, 10 min. bei 110°C getrocknet. Anschließend wurden an den ausgerüsteten Geweben die flammhemmenden Eigenschaften geprüft. Die Prüfung erfolgte nach DIN 54 336 (Ausgabe November 1986), wobei eine Beflammzeit von 3 sec. angewandt wurde.

Die Ergebnisse zeigt Tabelle 2 (wobei niedrigere Zahlenwerte günstiger sind als höhere)

**Tabelle 2**

| | Brennzeit (sec.) | Einbrennlänge (mm) (Brennstrecke) |
|---|---|---|
| Lösung A | 7 | 85 |
| Lösung B | 0 | 20 |
| Lösung C | 0 | 20 |

Diese Ergebnisse zeigen, dass die flammhemmenden Wirkungen, welche mit Lösung B und mit Lösung C erhalten werden, denen überlegen sind, die sich mit Lösung A erhalten lassen.

## Patentansprüche

1. Zusammensetzung, herstellbar durch folgende nacheinander ablaufende Verfahrensschritte
a) Herstellung einer Mischung A), welche Methanphosphonsäure, Borsäure und Wasser enthält,
b) Zugabe von Dicyandiamid und/oder Guanylharnstoff zur Mischung A),
c) gegebenenfalls Neutralisation des entstandenen Gemischs mit einer Base.

2. Zusammensetzung nach Anspruch 1, **dadurch gekennzeichnet, dass** nach Durchführung von Verfahrensschritt a) die Mischung A) auf eine Temperatur im Bereich von 70°C bis 95°C erwärmt wird und dass während der Durchführung von Verfahrensschritt b) bei einer Temperatur in diesem Bereich gearbeitet wird.

3. Zusammensetzung nach Anspruch 1 oder 2, **dadurch gekennzeichnet, dass** die in Schritt a) verwendete Methanphosphonsäure durch Hydrolyse von Methanphosphonsäuremono- und/oder -dimethylester hergestellt wurde.

4. Zusammensetzung nach einem oder mehreren der Ansprüche 1 bis 3, **dadurch gekennzeichnet, dass** die Mischung A) 25 bis 50 Gewichtsteile Methanphosphonsäure pro 100 Gewichtsteile Wasser und 0,1 Mol bis 0,3 Mol Borsäure pro Mol Methanphosphonsäure enthält.

5. Zusammensetzung nach einem oder mehreren der Ansprüche 1 bis 4, **dadurch gekennzeichnet, dass** in Schritt b) kein Guanylharnstoff verwendet wird und dass 20 bis 30 g Dicyandiamid pro 100 g Mischung A) eingesetzt werden.

6. Zusammensetzung nach einem oder mehreren der Ansprüche 1 bis 5, **dadurch gekennzeichnet, dass** die Mischung A) zusätzlich Harnstoff enthält.

7. Zusammensetzung nach Anspruch 6, **dadurch gekennzeichnet, dass** die Mischung A) 2 bis 10 g Harnstoff pro 100 g Methanphosphonsäure enthält.

8. Verwendung einer Zusammensetzung nach einem oder mehreren der Ansprüche 1 bis 7 zur Behandlung von Fasermaterialien, insbesondere von textilen Flächengebilden.

9. Verwendung nach Anspruch 8, **dadurch gekennzeichnet, dass** die Fasermaterialien Gewebe sind, die zu 50 bis 100 Gew% aus Cellulosefasern, insbesondere aus Baumwolle, bestehen.
